# EUROPEAN PATENT APPLICATION

(11) **EP 3 636 828 A1**
(43) Date of publication of application: **15.04.2020**
(21) Application number: 18200113.1
(22) Date of filing: 12.10.2018
(51) Int. Cl.: D06N 3/14, C09D 175/04

(54) **COATED TEXTILE OBTAINABLE BY A SPRAYING PROCESS**

(71) Applicant: Henkel AG & Co. KGaA, 40589 Düsseldorf (DE)
(72) Inventor: Keller, Hannes, 40227 Düsseldorf (DE); Moeller, Thomas, 40593 Düsseldorf (DE); Ziskofen, Peter, 42697 Solingen (DE)

(57) **Abstract**

The present invention pertains to a method of coating a textile by a spraying process, a coated textile obtained by the method and the use of the coated textile as part of a clothing, a glove or a shoe.

## Description

The present invention pertains to a method of coating a textile by a spraying process, a coated textile obtained by the method and the use of the coated textile as part of a clothing, a glove or a shoe.

In the recent years the use of waterproof clothing, gloves and shoes became increasingly popular. Commonly waterproof and breathable shoes based on technologies such as GoreTex® are manufactured from flat "2D" materials. Therefore, GoreTex® "2D laminate" is cut into the right shape, and then sewn to the 3D inner shoe. Subsequently, the seam needs to be sealed with a waterproof tape.

Since the seam can lead to an uncomfortable wear comfort or even to injuries of the foot of the wearer, there is a need for different solutions to obtain water proof textile, in particular inner shoes.

Another known process is to apply a hot melt like film via an autoclave process, whereby the water proof layer is shrunk on a 3D textile. The process is time and energy intensive and creates a lot of waste.

An option could be to coat a single textile before or after bringing it into the desired shape. However, in case of a shoe the waterproof coating has to be between the inner and the outer shoe. An inner shoe coated on the inside would as well not be comfortable for the wearer. Therefore, the aim is to provide a method which can essentially coat only one side of a textile. However, commonly used textiles are hydrophilic and soak up water based dispersions when simply dipping them into the dispersion, which leads to an impregnation of both sides.

Thus, the object is to provide a method, which essentially coats at least one side of a textile. Additionally, to be employed in clothing, gloves or shoes, the coating needs to be breathable, flexible and stable toward hydrolysis.

The inventors of the present invention have surprisingly found that this object can be solved by the specific method of coating a textile by a spraying process according to the present invention, a coated textile obtained by the method and the use of the coated textile of the present invention as part of a clothing, a glove or a shoe. Surprisingly, the method of the present invention provides lower manufacturing costs and an easier automatization due to the avoidance of the additional sealing step of the seam or the autoclave process.

Therefore, in a first aspect the present invention pertains to a method of coating a textile, comprising the steps of:
i) providing a textile;
ii)
   a) dipping at least one surface of the textile into an aqueous solution comprising 0.2 to 85 wt.-%, preferably 1 to 40 wt.-%, more preferably 2 to 20 wt.-%, of at least one inorganic salt; or
   b) spraying an aqueous solution comprising 0.2 to 85 wt.-%, preferably 1 to 40 wt.-%, more preferably 2 to 20 wt.-% of at least one inorganic salt onto at least one surface of the textile; or
   c) spraying at least one inorganic salt as a powder onto at least one surface of the textile, preferably a preheated textile;
iii) removing the textile of step ii) from the aqueous solution if step ii) a) is performed and optionally allowing the excess aqueous solution to flow off and/or optionally drying the textile; or
   allowing the excess aqueous solution to flow off and/or drying the textile if step ii) b) is performed;
iv) applying a polyurethane based dispersion by spraying on the surface of the textile, which was brought into contact with the at least one inorganic salt, of step ii) or iii);
v) optionally allowing the excess dispersion to flow off and/or optionally drying the textile obtained in step iv) thereby obtaining a coated textile.

Furthermore, in a second aspect the present invention relates to a coated textile, preferably a coated jacket, glove or inner shoe, which is obtainable by the method according to the present invention.

Moreover, the present invention in a third aspect pertains to the use of the coated textile of the present invention as part of a clothing, preferably a jacket, a glove or a shoe, preferably an inner shoe.

"At least one", as used herein, means one or more, i.e. 1, 2, 3, 4, 5, 6, 7, 8, 9 or more of the referenced species. Similarly, "one or more", as used herein, relates to at least one and comprises 1, 2, 3, 4, 5, 6, 7, 8, 9 or more. In connection with a given species, the term does not relate to the total number of molecules, but rather to the type of species. "At least one inorganic salt", for example, thus means that one type of inorganic salt or two or more different types of inorganic salts may be present. In connected with amounts, the term relates to the total amount of the referenced species. In case of the inorganic salt, for example, this means that the given amount is the total amount of all inorganic salts in the aqueous solution.

"About", as used herein, relates to ± 20 %, preferably ± 10 % of the numerical value to which it refers. "About 200" thus relates to 200 ± 40, preferably 200 ± 20.

All percentages given herein in relation to the compositions or formulations relate to weight % relative to the total weight of the respective composition or formula, if not explicitly stated otherwise.

In the present specification, the terms "a" and "an" and "at least one" are the same as the term "one or more" and are used interchangeably.

The term "essentially free" within the context of this invention is to be interpreted as the respective compound is contained in the composition in an amount of less than 5 wt.-%, 4 wt.-%, 3 wt.-%, 2 wt.-%, 1.5 wt.-%, 1 wt.-%, 0.75 wt.-%, 0.5 wt.-%, 0.25 wt.-%, or 0.1 wt.-%, based on the total weight of the composition, wherein the amounts are respectively more preferred in descending order. For example, 4 wt.-% is more preferred than 5 wt.-% and 3 wt.-% is more preferred than 4 wt.-%.

If reference is made herein to a molecular weight, this reference refers to the average number molecular weight Mₙ, if not explicitly stated otherwise. The number average molecular weight Mₙ can be calculated based on end group analysis via OH numbers according to DIN 53240-1:2013-06, in the present invention referred to as OH group titration as well, or can be determined by gel permeation chromatography according to DIN 55672-1:2007-08 with THF as the eluent. If not stated otherwise, all given molecular weights are those determined by gel permeation chromatography. The weight average molecular weight M_{w} can be determined by GPC, as described for Mₙ.

The NCO value is measured according to DIN EN ISO 11909:2007-05 if not explicitly stated otherwise.

The present invention in particular pertains to:
1. Method of coating a textile, comprising or consisting of the steps of:
   i) providing a textile;
   ii)
      a) dipping at least one surface, preferably only one surface, of the textile into an aqueous solution comprising 0.2 to 85 wt.-%, preferably 1 to 40 wt.-%, more preferably 2 to 20 wt.-%, of at least one inorganic salt; or
      b) spraying an aqueous solution comprising 0.2 to 85 wt.-%, preferably 1 to 40 wt.-%, more preferably 2 to 20 wt.-%, of at least one inorganic salt onto at least one surface of the textile; or
      c) spraying at least one inorganic salt as a powder onto at least one surface of the textile, preferably a preheated textile;
   iii) removing the textile of step ii) from the aqueous solution if step ii) a) is performed and optionally allowing the excess aqueous solution to flow off and/or optionally drying the textile; or
      optionally allowing the excess aqueous solution to flow off and/or optionally drying the textile if step ii) b) is performed;
   iv) applying a polyurethane based dispersion by spraying on the surface of the textile which was brought into contact with the at least one inorganic salt of step ii) or iii);
   v) optionally allowing the excess dispersion to flow off and/or optionally drying the textile obtained in step iv) thereby obtaining a coated textile.
2. The method according to item 1, wherein the textile is a woven, knitted or nonwoven textile, preferably based on polyamide fibers, polyester fibers, polyurethane fibers, in particular polyurethane elastic fibers, natural fibers, like cotton; preferably the textile is based on polyamide fibers, polyester fibers or polyurethane fibers
   and/or
   the textile is a clothing, a glove or an inner shoe, more preferably an inner shoe and/or
   the part of the textile, upon which the coating is provided contains no seam.
3. The method according to item 1 or 2, wherein the inorganic salt of the aqueous solution contains multivalent cations, preferably selected from Ca²⁺, Mg²⁺, Sr²⁺, Al³⁺, Fe²⁺, Fe³⁺ or mixtures thereof, preferably Ca²⁺, Mg²⁺ or mixtures thereof, more preferably Ca²⁺
   and/or
   anions selected from NO₃²⁻, F⁻, Cl⁻, SO₄³⁻, CO₃²⁻, PO₄³⁻ or mixtures thereof, preferably NO₃²⁻, F⁻, Cl⁻, SO₄³⁻ or mixtures thereof, more preferably NO₃²⁻.
4. The method according to any of the preceding items, wherein the drying step of step iii) is active or passive drying, preferably an active drying with a dryer, more preferably selected from ovens convection ovens, radiation sources like IR, NIR and microwaves, by reduction of ambient pressure or vacuum, air flow as well as combination thereof, and/or the drying in step iii) is performed until the textile obtained after step ii) is dry.
5. The method according to any of the preceding items, wherein the polyurethane based dispersion comprises polymers with a weight average molecular weight of 10,000 to 500,000 g/mol, preferably 20,000 to 100,000 g/mol, more preferably 40,000 to 50,000 g/mol.
6. The method according to any of the preceding items, wherein the polyurethane based dispersion comprises polymers with a number average molecular weight of 1,000 to 25,000 g/mol, preferably 1,500 to 20,000 g/mol, more preferably 2,000 to 15,000 g/mol.
7. The method according to any of the preceding items, wherein the polyurethane based dispersion comprises polymers with a polydispersity of 1.0 to 50.0, preferably 2.5 to 40.0, more preferably 5.0 to 30.0.
8. The method according to any of the preceding items, wherein the dispersion is a polyurethane based dispersion, preferably in which the polyurethane polymers are based on more than 20 wt.-% polyol, preferably more than 40 wt.-% polyol.
9. The method according to any of the preceding items, wherein the drying step of step v) is active or passive drying, preferably an active drying with a dryer
   and/or
   the drying in step v) is performed until the textile obtained after step iv) is dry.
10. The method according to any of the preceding items, wherein the coating of the coated textile has a coating weight of 5.0 to 1,000 g/m², preferably 100 to 600 g/m², more preferably 150 to 450 g/m², preferably determined after drying the coated sample for 1 hour at 90°C and allowing to rest at 25°C for one day.
11. The method according to any of the preceding items, wherein the coated textile is completely or partly coated, preferably completely.
12. The method according to any of the preceding items, wherein the coated textile has a water column > 1 m, preferably > 3 m, more preferably > 5m, preferably measured according to ISO 811:2018.
13. The method according to any of the preceding items, wherein the coated textile has a breathability of more than 50 g/dm², preferably more than 100 g/dm², more preferably more than 150 g/dm², even more preferably more than 250 g/dm², preferably measured according to DIN 53122-1:2001-08..
14. A coated textile, preferably a coated jacket, glove or inner shoe, which is obtainable by the method according to any of items 1 to 13.
15. Use of the coated textile of item 14 as part of a clothing, preferably a jacket, a glove or a shoe, preferably an inner shoe.

The coating in the present invention is formed by a polyurethane based dispersion.

In a preferred embodiment the dispersion is a polyurethane based dispersion.

As coating dispersions any known polyurethane based dispersions are suitable.

Polyurethane based dispersions are in general based on at least one NCO-containing compound and at least one compound which can react with the NCO-group, preferably an OH-containing compound. Furthermore, the dispersion can contain at least one additive.

The pH of the polyurethane dispersions is preferably less than 9.0, more preferably less than 8.5, particularly preferably less than 8.0, most preferably 6.0 to 8.0.

The at least one NCO-containing compound is preferably a polyisocyanate or a polyurethane-prepolymer or a mixture of both.

The polyisocyanates may be the aromatic, araliphatic, aliphatic or cycloaliphatic polyisocyanates having an NCO functionality of 2 or more which are known per se to the person skilled in the art. Examples of suitable polyisocyanates are hydrogenated methylene diphenyl isocyanate MDI (HMDI or H12MDI), saturated MDI (SMDI), or reduced MDI (RMDI), 1,4-butylene diisocyanate, 1,6-hexamethylene diisocyanate (HDI), isophorone diisocyanate (IPDI), 2,2,4- and/or 2,4,4-trimethylhexamethylene diisocyanate, 1,4-cyclohexylene diisocyanate, 1 ,4-phenylene diisocyanate, 2,4- and/or 2,6-tolylene diisocyanate, 1,5-naphthylene diisocyanate, 2,2'- and/or 2,4'- and/or 4,4'-diphenylmethane diisocyanate, 1,3- and/or 1,4-bis(2-isocyanatoprop-2-yl)benzene (TMXDI), 1,3-bis(isocyanatomethyl)benzene (XDI), and alkyl 2,6-diisocyanatohexanoates (lysine diisocyanates) containing C1-C8-alkyl groups. Besides the above-mentioned polyisocyanates, it is also possible to employ proportionately modified diisocyanates having a uretdione, isocyanurate, urethane, allophanate, biuret, iminooxadiazinedione and/or oxadiazinetrione structure and unmodified polyisocyanates containing more than 2 NCO groups per molecule, for example 4-isocyanatomethyloctane 1,8-diisocyanate (nonane triisocyanate) or triphenylmethane 4,4',4"-triisocyanate.

Preferably polyisocyanates or polyisocyanate mixtures of the above-mentioned type contain exclusively aliphatically and/or cycloaliphatically bonded isocyanate groups and have an average NCO functionality of the mixture of 2 to 4, preferably 2 to 2.6 and particularly preferred 2 to 2.4.

Particularly, preferred polyurethane based dispersions of the present invention comprise a hydrophilic polycarbodiimide. In certain embodiments, the hydrophilic polycarbodiimide comprises an aqueous aliphatic polycarbodiimide dispersion. As will be appreciated, and as used herein, the term polycarbodiimide refers to a compound containing two or more carbodiimide units, that is, units of the structure: -N=C=N-.

Polycarbodiimides can be prepared by condensation reaction of a polyisocyanate in the presence of a suitable catalyst to form a polycarbodiimide having terminal isocyanate groups. The polycarbodiimides used in certain embodiments of the dispersions are aliphatic. As a result, they are derived from one or more aliphatic polyisocyanates. Suitable aliphatic polyisocyanates include, for example, 4,4'-dicyclohexylmethane diisocyanate (also known as PICM, hydrogenated methylene diphenyl isocyanate MDI (HMDI or H12MDI), saturated MDI (SMDI), or reduced MDI (RMDI), 1,6-hexamethylene diisocyanate (HDI), isophorone diisocyanate (IPDI), 1,4-cyclohexane diisocyanate (CIIDI), 1,3-bis(isocyanatomethyl)cyclohexane (H-XDI), m-tetramethylxylene diisocyanate (m-TMXDI), and mixtures thereof.

The preferred polycarbodiimide based dispersion suitable for use in the present invention can be modified to be hydrophilic. This can be accomplished by reacting the terminal isocyanate groups with one or more hydrophilic active-hydrogen compounds, such as monothiols, monoamines, and/or mono alcohols, such that the resulting polycarbodiimide contains substantially no remaining isocyanate functionality. In certain embodiments, the hydrophilic active-hydrogen compound comprises one or more monoalcohols. Examples of monoalcohols that are suitable for use in preparing the aqueous aliphatic polycarbodiimide dispersion include, without limitation, aliphatic monoalcohols having 1 to 18 carbon atoms, specific examples of which include, but are not limited to, ethanol, n-butanol, 2-ethylhexanol, 1-octanol, 1-dodecanol, 1-hexadecanol, as well as poly(alkylene oxide) monoalkyl ethers, such as, for example, poly(ethylene oxide) monomethyl ethers. As will be appreciated, two or more of the foregoing monoalcohols can be used.

The solids content of the aqueous polycarbodiimide based dispersion is, in certain embodiments, at least 25% by weight, such as at least 30 or, in some cases, at least 35% by weight and/or no more than 65% by weight, such as no more than 50 or, in some cases, no more than 45% by weight, based on the total weight of the dispersion.

One example of an aqueous aliphatic polycarbodiimide dispersion that is suitable for use in the coating compositions of the present invention is Desmodur® XP 2802, a waterborne dispersion of a hydrophilically modified, aliphatic polycarbodiimide, 40% by weight resin solids in water from Covestro AG, Leverkusen, Germany.

The term polyol component comprises polyester polyols as well.

It is possible that this polyester polyol is the sole polyol of the polyol component.

Examples for aliphatic dicarboxylic acids include tetrahydrophthalic acid, hexahydrophthalic acid, cyclohexanedicarboxylic acid, adipic acid, azelaic acid, sebacic acid, glutaric acid, maleic acid, fumaric acid, itaconic acid, malonic acid, suberic acid, 2-methylsuccinic acid, 3,3-diethylglutaric acid and/or 2,2-dimethylsuccinic acid. The corresponding anhydrides can also be used as acid source. The aliphatic dicarboxylic acids may be used in the form of one or more of their corresponding diester derivatives, particularly their dimethanol or diethanol ester derivatives.

Examples for linear aliphatic diols include 1 ,2-ethanediol (i.e., ethylene glycol), 1,3-propanediol, 1,4-butanediol, 1,5-pentanediol, 1,6-hexanediol, 1,7-heptanediol, 1,8-octanediol, 1,9-nonanediol, 1,10-decanediol and 1,3-butanediol. Preferably, linear aliphatic diols are selected from the group consisting of 1,3- and 1 ,4-butanediol, 1,6-hexanediol and/or 1,8-octanediol.

Examples for branched aliphatic diols include neopentyl glycol, 1,2-propanediol, 2-methyl-1,2-propanediol, 2-methyl-1,3-propanediol, 1,2-butanediol, meso-2,3-butanediol, 2,3-dimethyl-2,3-butanediol (pinacol), 1,2-pentanediol, 2,3-pentanediol, 2,4-pentanediol, 1,4-pentanediol, 2,2,4-trimethyl-1,3-pentanediol, 1,3-hexanediol, 1 ,4-hexandiol, 1,5-hexanediol, 2,5-hexanediol, 2,5-dimethyl-2,5-hexanediol, 1,3-cyclobutanediol, 2,2,4,4-tetramethylcyclobutanediol, 1,2-cyclopentanediol, 1,3-cyclopentanediol, 1,3-dimethyl-1,3-cyclopentanediol, 1,2-cyclohexanediol, 1,3-cyclohexanediol, 1 ,4-cyclohexanediol and 1 ,4-dimethylolcyclohexane. Preferably, branched aliphatic diols are selected from the group consisting of neopentyl glycol, 2-methyl-1,3-propanediol and/ or 2,2,4-trimethyl- 1,3 -pentanediol.

Suitable polyester are cyclic polyester polyols having a number average molecular weight according to OH titration of 500 to 5,000 g/mol, preferably 850 to 2,500 g/mol. The number average molecular weight is determined according to OH titration.

The polyester polyol can preferably be based on a cyclic polyester chain containing at least any one of a cyclohexane ring, a cyclohexene ring, a bicyclo[4.4.0]decane ring and a bicyclo[4.4.0]decadiene ring and can be prepared, for example, by the method described below.

An unsaturated fatty acid having from 2 to 4 (preferably 2) ethylenic double bonds or an ester thereof (first unsaturated fatty acid or ester thereof) and an unsaturated fatty acid having from 1 to 4 (preferably one or 2) ethylenic double bonds or an ester thereof (second unsaturated fatty acid or ester thereof) are subjected, for example, to transfer of the double bond and/or Diels-Alder reaction to be dimerized, thereby preparing a dimer acid having a cyclohexene ring or a bicyclo[4.4.0]decadiene ring. The resulting dimer acid is hydrogenated to prepare a dimer acid having a cyclohexane ring or a bicyclo[4.4.0]decane ring.

A reaction product (ester) of the dimer acid having any one of the cyclic structures described above with an alcohol, for example, methanol, is reduced to prepare a dimer diol having any one of the cyclic structures described above.

Then, at least one of the dimer acid and dimer diol described above is incorporated into the polymerization component, and condensation polymerization between a dicarboxylic acid and a diol is performed to prepare a cyclic polyester chain containing at least one of a cyclohexane ring, a cyclohexene ring, a bicyclo[4.4.0]decane ring and a bicyclo[4.4.0]decadiene ring.

The unsaturated fatty acid having from 2 to 4 ethylenic double bonds or the ester thereof, which is used in the preparation of the dimer acid, is preferably an unsaturated fatty acid having from 12 to 24 carbon atoms or an ester thereof, and includes, for example, tetradecadienoic acid, hexadecadienoic acid, octadecadienoic acid (for example, linoleic acid), eidosadienoic acid, docosadienoic acid, octadecatrienoic acid (linolenic acid) and eicosatetraenoic acid (for example, arachidonic acid). The unsaturated fatty acid having one ethylenic double bond or the ester thereof, which is used in the preparation of the dimer acid, is preferably an unsaturated fatty acid having from 12 to 24 carbon atoms or an ester thereof, and includes, for example, tetradecenoic acid, hexadecenoic acid, octadecenoic acid (for example, oleic acid, elaidic acid or vaccenic acid), eicocenoic acid (for example, gadoleic acid) and dococenoic acid (for example, erucic acid).

The dimer acid obtained by the preparation method described above is ordinarily a mixture of plural kinds of dimer acids different in the chemical structure depending on the position of the double bond in the unsaturated fatty acid, which is used in the preparation of the dimer acid, and the degree of hydrogenation of the dimer acid, and also a mixture of dimer acid having a ring structure and a dimer acid having no ring structure. Moreover, there is a case in which a monomer acid and/or a trimer acid is mixed in the dimer acid obtained by the preparation method described above.

Examples of the chemical structure of the dimer acid having a cyclohexane ring, a cyclohexene ring, a bicyclo[4.4.0]decane ring or a bicyclo[4.4.0]decadiene ring are shown below. In the structural formulae shown below, each of a, b, c and d represents an integer, and total number of carbon atoms included in the molecule is, for example, from 24 to 48.

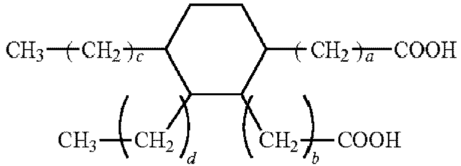

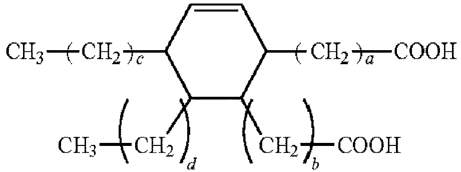

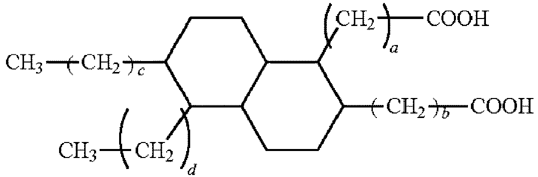

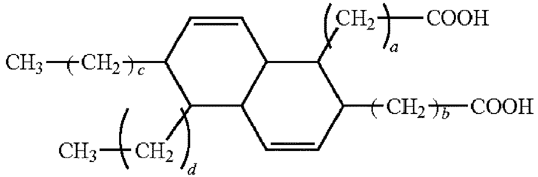

According to an example of the exemplary embodiment, the cyclic polyester chain in the monomer unit having a cyclic polyester chain includes a cyclic polyester containing a structural unit obtained by polymerization of at least one selected from a dimer acid having a ring structure, which is a dimer acid obtained by dimerizing an unsaturated fatty acid having from 12 to 24 carbon atoms or an ester thereof, a hydrogenated dimer acid obtained by hydrogenating the dimer acid described above and a dimer diol derived from the dimer acid or the hydrogenated dimer acid described above. The ring structure described above is preferably at least any one of a cyclohexane ring, a cyclohexene ring, a bicyclo[4.4.0]decane ring or a bicyclo[4.4.0]decadiene ring.

Examples of commercially available product of the cyclic polyester derived from a dimer acid include, for example, Priplast 1901 (polyester diol having hydroxyl groups at both terminals, number average molecular weight according to OH titration: 2,000 g/mol), Priplast 3197 (polyester diol having hydroxyl groups at both terminals, number average molecular weight according to OH titration: 2,000 g/mol) and Priplast 3186 (polyester diol having hydroxyl groups at both terminals, number average molecular weight according to OH titration: 1,700 g/mol) produced by Croda Japan KK.

Preferred polyurethane based dispersions of the present invention comprise a polyvinyl alcohol (PVA). A preferred polyvinyl alcohol has a viscosity in the range of from 10 to 80 cPs, more preferably 38 to 55 cPs. The cPs measurements given herein refer to 4% aqueous solution at 20° C. Suitable commercially available polyols are for example Mowiol 40-88 and Mowiol 18-88, both supplied by Kuraray Co., Ltd, Japan.

If the textile is treated in step ii) according to the invention by spraying at least one inorganic salt as a powder onto at least one surface of the textile, preferably a preheated textile, it is not necessary to remove the textile of step ii) from an aqueous solution, to allow the excess aqueous solution to flow off and to dry the textile. By using this embodiment, one method step is saved.

In embodiments according to the invention, step ii) takes place before step iv). However, it is not excluded that step ii) and step iv) can take place at the same time. In this preferred embodiment, a two chamber spray system can be used, which contains in chamber 1 the aqueous solution comprising 0.2 to 85 wt.-%, preferably 1 to 40 wt.-%, more preferably 2 to 20 wt.-%, of at least one inorganic salt or at least one inorganic salt as a powder according to step ii) of the method; and in chamber 2 a polyurethane based dispersion according to step iv) of the method. In this embodiment, the mixtures of chamber 1 and chamber 2 can be simultaneously sprayed onto at least one surface of the textile.

In a further embodiment, only one surface of the textile is brought into contact with the aqueous solution comprising at least one inorganic salt or the inorganic salt in step ii). In another embodiment, the complete textile is brought into contact with the aqueous solution comprising at least one inorganic salt or the inorganic salt in step ii).

In various embodiments, the polyurethane based dispersion further comprises one or more additives selected from fillers, stabilizers, conservatives, antifoaming agents, emulsifiers, rheology modifiers, colorants, pigments and mixtures thereof, preferably pigments and colorants are additionally present.

Optionally present nonionic surfactants may serve as an emulsifier and may be selected from the group consisting of alcohol ethoxylates (alkyl ethoxylates), alkylphenol ethoxylates, phenol ethoxylates, amide ethoxylates, glyceride ethoxylates, fatty acid ethoxylates, fatty amine ethoxylates, and mixtures thereof, preferably alkyl ethoxylates, such as polyethylene glycol C8-20 alkyl ether, more preferably PEG 2-10 lauryl ether.

Optionally present filler may be selected from all known fillers suitable for polyurethane based dispersions. Preferred fillers are fumed silicas.

Known antifoaming agents that may be used in accordance with the invention included organo-modified polysiloxanes.

Furthermore, preferred polyurethane based dispersions of the present invention comprise one or more rheology modifiers as additive. Examples of rheology modifiers include associated hydrophilic polyurethanes, such as DSX1415 from Cognis Corp., BorchiGel L75N from Borchers, or alkali-swellable thickeners such as UCAR Polyphobes 102 and 106 from Dow Chemical.

The preparation of the polyurethane dispersions can be carried out in one or more steps in a homogeneous or multistep reaction, some in the disperse phase. After complete or partial polyaddition a dispersion, emulsification or dissolution step is carried out. If desired, a further polyaddition or modification in the disperse phase is subsequently carried out. All processes known from the prior art, such as, for example, the prepolymer mixing process, acetone process or melt dispersal process, can be used here. The acetone process is preferably used.

For preparation by the acetone process, the component(s) which can react with the NCO-group and the NCO-component(s) are usually initially introduced for the preparation of an isocyanate-functional polyurethane prepolymer and optionally diluted with a solvent which is miscible with water, but inert to isocyanate groups and heated to temperatures in the range from 50 to 120 °C. In order to accelerate the isocyanate addition reaction, the catalysts known in polyurethane chemistry can be employed.

Suitable solvents are the conventional aliphatic, keto-functional solvents, such as acetone, 2-butanone, which can be added not only at the beginning of the preparation, but, if desired, can also partly be added later. Preference is given to acetone and 2-butanone.

Other solvents, such as xylene, toluene, cyclohexane, butyl acetate, methoxypropyl acetate, N-methylpyrrolidone, N-ethylpyrrolidone, solvents containing ether or ester units, may additionally be employed and distilled off in full or part or, in the case of N-methylpyrrolidone, N-ethylpyrrolidone, remain completely in the dispersion. However, other solvents apart from the conventional aliphatic, keto-functional solvents are preferably not used.

In the preparation of the polyurethane prepolymer from the molar ratio of isocyanate groups to isocyanate-reactive groups is preferably 1.05 to 3.5, more preferably 1.1 to 3.0, particularly preferably 1.15 to 2.5.

The conversion into the prepolymer is carried out in part or full, but preferably in full. Thus, polyurethane prepolymers which contain free isocyanate groups are obtained in the solid state or in solution.

It is possible to add a neutralization step, if desired. In the neutralization step for the partial or complete conversion of potentially anionic groups into anionic groups, bases, such as tertiary amines, for example trialkylamines having 1 to 12 C atoms, preferably 1 to 6 C atoms, particularly preferably 2 to 3 C atoms, or alkali metal bases, such as hydroxides, in particular alkali or earth alkali metal hydroxides, are employed.

Examples thereof are trimethylamine, triethylamine, methyldiethylamine, tripropylamine, N-methylmorpholine, methyldiisopropylamine, ethyldiisopropylamine and diisopropylethylamine. The alkyl radicals may also carry, for example, hydroxyl groups, as in the case of the dialkylmonoalkanolamines, alkyldialkanolamines and trialkanolamines. Neutralizers which can be employed, if desired, are also inorganic bases, such as aqueous ammonia solution or sodium hydroxide or potassium hydroxide.

Preference is given to ammonia, triethylamine, triethanolamine, dimethylethanolamine or diisopropylethylamine, as well as sodium hydroxide and potassium hydroxide, particularly preferably sodium hydroxide and potassium hydroxide. The molar amount of the bases is 50 to 125 mol %, preferably between 70 and 100 mol %, of the molar amount of the acid groups to be neutralized. The neutralization can also be carried out simultaneously with the dispersion if the dispersion water already comprises the neutralizer.

In a further optional process step, the resultant prepolymer is subsequently dissolved, if this has not already taken place or has only taken place in part, with the aid of aliphatic ketones, such as acetone or 2-butanone.

In an optional chain extension step, NH₂- and/or NH-functional components are reacted in part or full with the remaining isocyanate groups of the prepolymer. The chain extension/termination is preferably carried out after the dispersion in water. If the partial or complete chain extension is carried out using anionic or potentially anionic hydrophilizing agents containing NH₂ or NH groups, the chain extension of the prepolymers is preferably carried out prior to the dispersion.

In another embodiment of the dispersion the NCO-reactive component further comprises a polyamine chain extender. These are preferably aliphatic or cycloaliphatic diamines, although it is also possible, if needed, to use trifunctional polyamines or polyfunctional polyamines in order to achieve specific properties. In general, it is possible to use polyamines containing additional functional groups, such as, for example, OH groups. Examples of suitable aliphatic polyamines are ethylenediamine, 1,2- and 1,3-propylenediamine, 1,4-tetramethylenediamine, 1,6-hexamethylenediamine, the isomer mixture of 2,2,4- and 2,4,4-trimethylhexamethylenediamine, 2-methylpentamethylenediamine and diethylenetriamine. Preferred amounts of the polyamine chain extender are > 1 wt.-% to < 10 wt.-%, based on the total weight of the NCO-reactive component.

In addition, compounds which, besides a primary amino group, also contain secondary amino groups or, besides an amino group (primary or secondary), also contain OH groups can also be added. Examples thereof are primary/secondary amines, such as diethanolamine, 3-amino-1-methylaminopropane, 3-amino-1-ethylaminopropane, 3-amino-1-cyclohexylaminopropane, 3-amino-1-methylaminobutane, and alkanolamines, such as N-aminoethylethanolamine, ethanolamine, 3-aminopropanol, and neopentanolamine.

Furthermore, monofunctional isocyanate-reactive amino compounds, such as, for example, methylamine, ethylamine, propylamine, butylamine, octylamine, laurylamine, stearylamine, isononyloxypropylamine, dimethylamine, diethylamine, dipropylamine, dibutylamine, N-methylaminopropylamine, diethyl(methyl)aminopropylamine, morpholine, piperidine, or suitable substituted derivatives thereof, amidoamines made from diprimary amines and monocarboxylic acids, monoketimes of diprimary amines, primary/tertiary amines, such as N,N-dimethylaminopropylamine, can also be added.

The dispersion is preferably carried out after the chain extension, if a chain extension took place. To this end, the dissolved polyurethane prepolymer is either introduced into the dispersion water, optionally with high shear, such as, for example, vigorous stirring, or conversely the dispersion water is stirred into the polyurethane prepolymer solutions. The polyurethane prepolymer is preferably added to the water. Optionally present additives can be added at this process step.

The solvent still present in the dispersions after the dispersion step is usually subsequently removed by distillation. Removal during the dispersion is likewise possible. The residual content of organic solvents in the polyurethane dispersions is preferably less than 1.0 % by weight, based on the entire dispersion.

The pH of the polyurethane dispersions is preferably less than 9.0, more preferably less than 8.5, particularly preferably less than 8.0 and very particularly preferably 6.0 to 8.0. The solids content of the polyurethane dispersions is preferably 30 to 60 % by weight, more preferably 35 to 50 % by weight.

The polyurethane dispersion, preferably comprising 30 or more, typically 40 to 60 % by weight solids (as, for example, determined by drying loss measurements at 150°C for 30 minutes to evaporate the water/solvents), with the solids being mainly composed of the polyurethane polymer particles of a preferred diameter between 30 and 1000 nm, preferably between 50 and 500 nm, more preferably between 80 and 250 nm (as determined by dynamic light scattering (DLS) according to ISO 22412:2017).

The liquid phase of the dispersion comprises or consists of water, and may, in certain embodiments, also include minor amounts of organic solvents or other liquid components, although it is preferred that it consists essentially of water, i.e. to about 95 vol.%. In the polyurethane dispersion, the liquid phase preferably makes up 40 to 70 % by weight, more preferably 40 to 65 % by weight.

### Examples:

### Synthesis of polyurethane dispersion 1

For synthesis, 1573.79 g of Priplast 1901 (Croda), 60.00 g of Carbowax 1450 (Dow) and 40.00 g of DMPA (2,2-bis(hydroxymethyl) propionic acid) were weighted into a 5 L three-neck flask. The flask was provided with an inlet for vacuum or nitrogen application, KPG stirrer shaft and glass stopper for dehydration. Polyols were heated to 85 °C (bath temperature) and dehydrated by less than 1 mbar. Subsequently, the flask was aired with dry nitrogen. A reflux condensator and an internal contact thermometer were added to the flask via a double-neck unit. 326.21 g of isophorone diisocyanate were added to the mixture at 68 °C. The flask was rinsed with 50 g of dried acetone in order to make sure that the complete amount of isocyanate was in the flask. Afterwards, it was catalyzed with 1.00 g of Borchi®Kat 0761 (in 50 % acetone solution). After 3.25 hours at 85 °C, an NCO value of 1.68 wt.-% was measured by titration according to Spiegelberger (DIN EN ISO 11909:2007-05). The resulting prepolymer was dissolved in 2000 g of dry acetone.

For emulsifying, 3500 g of water, 23.86 g of NaOH (50 %) and 2 droplets of Tego Antifoam 2291 were heated to 40 °C. The prepolymer/acetone mixture was added by stirring with a stirrer from Ultraturrax at 10,000 U/min. After 10 minutes, 47.68 g of isophorone diamine were added as a solution into 238.45 g of water. Subsequently, acetone was distilled using a device from Rotavapor and the dispersion was filtered through a Perlon sieve bag (80 µm).

### Dynamic light scattering (DLS) according to Malvern:

Z-average diameter of 118 nm
Pdi of 0.13
Solids content of 40 %

### Example 1

### Used compounds:

White hydrophilic textile LJ A 3411 AD from Jade Long John,
Spray gun pilot mini from Walther, nozzle diameter 2.2 mm, compressed air approx. 2.5 bar
Plastic case (60 x 42 x 40 cm)
Circular formed dipping body consisting of aluminum with a diameter d=12 cm,
Drying cabinet with circulating air
Sieve bag, 80 µm
Adhesive tape to fix the textile at the aluminum body
Polyurethane dispersion 1
Tegopren 5878: non-ionic modified Tri-Siloxane
Byk 024: mixture of polysiloxanes and hydrophobic solids in polyglycol
Desmodur XP 2802 (aliphatic polycarbodiimide, approx. 40 %) from Covestro,
Borchi®Gel L75N from Borchers (polyurethane-based thickener),
Borchi®Gel ALA from Borchers (acrylate-based thickener),
Luconyl NG green 8730 (Z-average diameter of 136 nm, polydispersity index (Pdi) of 0.18) from BASF,
Calcium nitrate solution (5% for each 0.5 L; calcium nitrate tetrahydrate from VWR Chem (CAS 13477-34-4)
Approx. 1 L of deionized water heated to 50 °C in a vessel
Textest FX 3000, 10 cm² testing area

### Aqueous solutions:

| | |
|---|---|
| Calcium nitrate (5 %) | The calculated amounts are related to water free calcium nitrate. 463.14 g of calcium nitrate x 4H₂O were dissolved in 1145.92 g of deionized water by stirring. |

### Polyurethane dispersion-based mixture (PU mixture 1):

500.5 g of polyurethane dispersion 1 were sieved (80µm) and added to a vessel with a blade agitator and mixed at 500 to 600 rpm. Subsequently, 2.52 g of wetting agent (Tegopren 5878) and 1.01 g of defoamer agent (Byk 024) were added consecutively and homogenized. Afterwards, thickener mixture (2.98 g of a 9:1 mixture of Borchi®Gel L75N and Borchi®Gel ALA; as well as 15.05 g of Desmodur XP 2802) was added in portions and it was stirred for further 30 minutes. Viscosity was adjusted with deionized water (140.0 g) to 406 mPas (Brookfield, RVDV, spindle 2, 20 rpm, 23 °C). Subsequently, 0.45 g of green coloring agent (Luconyl Green NG 8730) were added, stirred in the dispersion and homogenized. Finally, the mixture was sieved (80 µm) again.

### Treatment of the textile:

A circular shaped piece with a diameter of 12 cm was cut out from the textile with scissors using a cardboard template. The weight of the circular textile piece was weighted by an analytical balance. The aluminum body was covered crease-free with the textile piece and it was fixed with adhesive tape. Subsequently, the textile piece was sprayed three times from left to right and from the top down with a calcium nitrate solution (5%) by a spray gun. Afterwards, the weight of the treated piece was determined by an analytical balance, immediately, and the coating weight was calculated (see formula below).
The textile piece was fixed to the aluminum body, again and it was sprayed with the PU mixture 1 by a spray gun. The distance between the spray gun and the aluminum body was approx. 30 to 40 cm. Subsequently, the textile piece was dried in the drying cabinet for 1 h at 90 °C. Then, the textile piece was washed out by dipping the textile in deionized water with a temperature of 50 °C. Afterwards, the piece was dried in the drying cabinet over night at 90 °C.

### Determination methods and results

The experiments were repeated twice and all coatings were visually assessed by microscope.

### Determination of the water column:

According to ISO 811:2018; Device: Textest FX3000; test surface 10 cm²; gradient: 0.612 mWS/min; criterion to stop: 3^{rd} droplet.

### Determination of the coating weight:

Two circular samples each (d=12 cm) of treated and untreated textiles were weighted.

### Calculation: (average value sample-average value (blind value (BW)))*1000=coating weight in g/m²

| **Sample** | **No.** | **Water column (mWs)** | **Coating weight of the dispersion (g/m²)** | **Coating weight of Ca-nitrate (5%) wet** |
|---|---|---|---|---|
| Example 1 | 1 | >15 | 147.1 | 6.2 |
| | 2 | >15 | 178.7 | 6.5 |

The example provided textile pieces, which were coated on one side and which were essentially free of bleeding. The other (inner) side did not show any signs of a coating by visual inspection (microscopy).

### Example 2

In a further example, a 20% solution of calcium nitrate (calculated as water free calcium nitrate) was sprayed on a textile attached to an aluminum body, as described before. The textile was dried for 1 h at 90 °C, then directly the PU mixture 1 from Example 1 was sprayed on the textile. Subsequently, the textile piece was dried in the drying cabinet for 1 h at 90 °C. Then, the textile piece was washed out by dipping the textile in deionized water with a temperature of 50 °C. Afterwards, the piece was dried in the drying cabinet over night at 90 °C.

The coated textile had a coating weight of 122.6 g/m², a water column >15 m and showed a breathability of 224 g/d*m².

## Claims

1. Method of coating a textile, comprising or consisting of the steps of:
i) providing a textile;
ii)
a) dipping at least one surface of the textile into an aqueous solution comprising 0.2 to 85 wt.-%, preferably 1 to 40 wt.-%, more preferably 2 to 20 wt.-%, of at least one inorganic salt; or
b) spraying an aqueous solution comprising 0.2 to 85 wt.-%, preferably 1 to 40 wt.-%, more preferably 2 to 20 wt.-%, of at least one inorganic salt onto at least one surface of the textile; or
c) spraying at least one inorganic salt as a powder onto at least one surface of the textile, preferably a preheated textile;
iii) removing the textile of step ii) from the aqueous solution if step ii) a) is performed and optionally allowing the excess aqueous solution to flow off and/or optionally drying the textile; or
allowing the excess aqueous solution to flow off and/or drying the textile if step ii) b) is performed;
iv) applying a polyurethane based dispersion by spraying on the surface of the textile, which was brought into contact with the at least one inorganic salt, of step ii) or iii);
v) optionally allowing the excess dispersion to flow off and/or optionally drying the textile obtained in step iv) thereby obtaining a coated textile.

2. The method according to claim 1, wherein the textile is a woven, knitted or nonwoven textile, preferably based on polyamide fibers, polyester fibers, polyurethane fibers, in particular polyurethane elastic fibers, natural fibers, like cotton; preferably the textile is based on polyamide fibers, polyester fibers or polyurethane fibers
and/or
the textile is a clothing, a glove or an inner shoe, more preferably an inner shoe and/or
the part of the textile, upon which the coating is provided contains no seam.

3. The method according to claim 1 or 2, wherein the inorganic salt of the aqueous solution contains multivalent cations, preferably selected from Ca²⁺, Mg²⁺, Sr²⁺, Al³⁺, Fe²⁺, Fe³⁺ or mixtures thereof, preferably Ca²⁺, Mg²⁺ or mixtures thereof, more preferably Ca²⁺
and/or
anions selected from NO₃²⁻, F⁻, Cl⁻, SO₄³⁻, CO₃²⁻, PO₄³⁻ or mixtures thereof, preferably NO₃²⁻, F⁻, Cl⁻, SO₄³⁻ or mixtures thereof, more preferably NO₃²⁻.

4. The method according to any of the preceding claims, wherein the drying step of step iii) is active or passive drying, preferably an active drying with a dryer, more preferably selected from ovens convection ovens, radiation sources like IR, NIR and microwaves, by reduction of ambient pressure or vacuum, air flow as well as combination thereof, and/or the drying in step iii) is performed until the textile obtained after step ii) is dry.

5. The method according to any of the preceding claims, wherein the polyurethane based dispersion comprises polymers with a weight average molecular weight of 10,000 to 500,000 g/mol, preferably 20,000 to 100,000 g/mol, more preferably 40,000 to 50,000 g/mol.

6. The method according to any of the preceding claims, wherein the polyurethane based dispersion comprises polymers with a number average molecular weight of 1,000 to 25,000 g/mol, preferably 1,500 to 20,000 g/mol, more preferably 2,000 to 15,000 g/mol.

7. The method according to any of the preceding claims, wherein the polyurethane based dispersion comprises polymers with a polydispersity of 1.0 to 50.0, preferably 2.5 to 40.0, more preferably 5.0 to 30.0.

8. The method according to any of the preceding claims, wherein the dispersion is a polyurethane based dispersion, preferably in which the polyurethane polymers are based on more than 20 wt.-% polyol, preferably more than 40 wt.-% polyol.

9. The method according to any of the preceding claims, wherein the drying step of step v) is active or passive drying, preferably an active drying with a dryer
and/or
the drying in step v) is performed until the textile obtained after step iv) is dry.

10. The method according to any of the preceding claims, wherein the coating of the coated textile has a coating weight of 5.0 to 1,000 g/m², preferably 100 to 600 g/m², more preferably 150 to 450 g/m², preferably determined after drying the coated sample for 1 hour at 90°C and allowing to rest at 25°C for one day.

11. The method according to any of the preceding claims, wherein the coated textile is completely or partly coated, preferably completely.

12. The method according to any of the preceding claims, wherein the coated textile has a water column > 1 m, preferably > 3 m, more preferably > 5m, preferably measured according to ISO 811:2018.

13. The method according to any of the preceding claims, wherein the coated textile has a breathability of more than 50 g/dm², preferably more than 100 g/dm², more preferably more than 150 g/dm², even more preferably more than 250 g/dm², preferably measured according to DIN 53122-1:2001-08..

14. A coated textile, preferably a coated jacket, glove or inner shoe, which is obtainable by the method according to any of claims 1 to 13.

15. Use of the coated textile of claim 14 as part of a clothing, preferably a jacket, a glove or a shoe, preferably an inner shoe.
